# EUROPÄISCHE PATENTANMELDUNG

(11) **EP 4 360 434 A1**
(43) Veröffentlichungstag der Anmeldung: **01.05.2024**
(21) Anmeldenummer: 23188991.6
(22) Anmeldetag: 01.08.2023
(51) Int. Cl.: A01D 41/127

(54) **LANDWIRTSCHAFTLICHE ARBEITSMASCHINE MIT EINER ZUSTANDSERMITTLUNGSEINRICHTUNG**

(30) Priorität: 28.10.2022 DE 102022128720
(71) Anmelder: CLAAS Selbstfahrende Erntemaschinen GmbH, 33428 Harsewinkel (DE)
(72) Erfinder: Wohlfahrt, Fabian, 33428 Harsewinkel (DE); Sprigade, Daniel, 59427 Unna (DE)
(74) Vertreter: CLAAS Gruppe

(57) **Zusammenfassung**

Die vorliegende Erfindung betrifft eine selbstfahrende landwirtschaftliche Arbeitsmaschine (1) zum Aufnehmen, Bearbeiten und Weiterleiten von Erntegut (2).

Die vorliegende Erfindung beruht auf dem allgemeinen Gedanken, dass ein Antriebsmotor (3) als auch Arbeitsaggregate (5) der landwirtschaftlichen Arbeitsmaschine (1) auf einem einheitlich ermittelten Betriebszustand angesteuert und/oder geregelt werden.

## Beschreibung

Die vorliegende Erfindung betrifft eine selbstfahrende landwirtschaftliche Arbeitsmaschine zum Aufnehmen, Bearbeiten und Weiterleiten von Erntegut.

Die DE 10 2018 103 250 A1 betrifft ein Verfahren zum Betreiben einer selbstfahrenden Erntemaschine, welche wahlweise in einem Erntebetriebsmodus und einem Straßenfahrmodus betrieben wird, umfassend einen Verbrennungsmotor, dessen Drehzahl durch eine Steuerungsvorrichtung in Abhängigkeit von dem gewählten Betriebsmodus eingestellt wird, wobei von der Steuerungsvorrichtung im Straßenfahrmodus für einen Anfahrvorgang aus dem Stillstand eine Anfahrdrehzahl vorgegeben wird, die bis auf eine zum Erreichen einer zulässigen Maximalfahrgeschwindigkeit erforderliche Motordrehzahl abgesenkt wird.

Die EP 2 223 588 A2 betrifft eine selbstfahrende Erntemaschine umfassend einen Verbrennungsmotor und eine elektronische Steuereinrichtung, die mit dem Verbrennungsmotor gekoppelt ist und die Drehzahl des Verbrennungsmotors vorgeben kann, und die mit einer Information beaufschlagbar ist, ob sich die Erntemaschine im Straßenfahrbetrieb oder im Erntebetrieb befindet. Die Steuereinrichtung gibt im Erntebetrieb in einer Automatikbetriebsart die Drehzahl des Verbrennungsmotors abhängig von einer durch die Steuereinrichtung selbsttätig erkannten Erntebetriebssituation der Erntemaschine vor. Außerdem kann der Verbrennungsmotor in einem Effizienzmodus bei einem lokalen Minimum des spezifischen Kraftstoffverbrauchs betrieben werden.

Der vorliegenden Erfindung liegt die Aufgabe zugrunde, eine verbesserte oder zumindest eine alternative Ausführungsform einer selbstfahrenden landwirtschaftlichen Arbeitsmaschine anzugeben, wobei insbesondere eine einheitliche Steuerung und/oder Regelung der selbstfahrenden landwirtschaftlichen Arbeitsmaschine bereitgestellt wird.

Diese Aufgabe wird erfindungsgemäß durch die Gegenstände der unabhängigen Ansprüche gelöst. Vorteilhafte Ausführungsformen sind Gegenstand der abhängigen Ansprüche. Die vorliegende Erfindung beruht auf dem allgemeinen Gedanken, dass der Antriebsmotor als auch die Arbeitsaggregate der landwirtschaftlichen Arbeitsmaschine auf einem einheitlich ermittelten Betriebszustand angesteuert und/oder geregelt werden.

Die erfindungsgemäße selbstfahrende landwirtschaftliche Arbeitsmaschine zum Aufnehmen, Bearbeiten und Weiterleiten von Erntegut kann als selbstfahrender Mähdrescher oder selbstfahrender Feldhäcksler ausgebildet sein.

Eine solche selbstfahrende landwirtschaftliche Arbeitsmaschine kann zur Aufnahme, Bearbeitung, und/oder Weiterleitung des Ernteguts wenigstens ein Arbeitsaggregat oder mehrere Arbeitsaggregate aufweisen. Ein solches Arbeitsaggregat kann ein an die Arbeitsmaschine anbringbares Vorsatzgerät mit einem Schneidwerk, ein Schrägförderer der Arbeitsmaschine, eine Dreschvorrichtung der Arbeitsmaschine, eine Abscheidevorrichtung der Arbeitsmaschine, eine Förder- und Reinigungsvorrichtung der Arbeitsmaschine, ein Gebläse der Arbeitsmaschine, ein Strohhäcksler der Arbeitsmaschine, ein Kornelevator der Arbeitsmaschine, eine Überkehrschnecke der Arbeitsmaschine und/oder eine Korntankentleervorrichtung der Arbeitsmaschine sein.

Die selbstfahrende landwirtschaftliche Arbeitsmaschine weist einen Antriebsmotor mit einer Steuer- und/oder Regeleinrichtung auf. Jedes Arbeitsaggregat weist jeweils eine Steuer- und/oder Regeleinrichtung auf. Diese Steuer- und/oder Regeleinrichtungen können zur Steuerung und/oder Regelung der Arbeitsaggregate bzw. des Antriebsmotors ausgebildet und/oder programmiert sein.

Die selbstfahrende landwirtschaftliche Arbeitsmaschine weist eine Zustandsermittlungseinrichtung auf, die dazu vorgesehen und eingerichtet, insbesondere ausgebildet und/oder programmiert, ist, einen Betriebszustand der landwirtschaftlichen Arbeitsmaschine zu ermitteln und diesen ermittelten Betriebszustand der landwirtschaftlichen Arbeitsmaschine an alle Steuer- und/oder Regeleinrichtungen der Arbeitsaggregate als auch an die Steuer- und/oder Regeleinrichtung des Antriebsmotors zu übermitteln.

Die Zustandsermittlungseinrichtung kann kommunizierend, insbesondere jeweils kommunizierend, mit den Steuer- und/oder Regeleinrichtungen der Arbeitsaggregate und der Steuer- und/oder Regeleinrichtung des Antriebsmotors verbunden sein.

Unter einer kommunizierenden Verbindung kann hier zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden.

Der ermittelte Betriebszustand kann eine vordefinierte Erntebetriebssituation der selbstfahrenden landwirtschaftlichen Arbeitsmaschine sein. Der ermittelte Betriebszustand kann sein, dass die selbstfahrende landwirtschaftliche Arbeitsmaschine Erntegut aufnimmt und bearbeitet, und/oder aufgenommenes Erntegut weiterleitet bzw. entlädt, und/oder sich die Arbeitsmaschine in einem Stillstand befindet. Zusätzlich oder alternativ kann der ermittelte Betriebszustand sein, dass sich die selbstfahrende landwirtschaftliche Arbeitsmaschine auf einem zu bearbeitenden Feld, insbesondere in einem Vorgewende, oder auf einer Straße befindet.

Dieser mittels der Zustandsermittlungseinrichtung ermittelte Betriebszustand der landwirtschaftlichen Arbeitsmaschine hat den Vorteil, dass alle Steuer- und/oder Regeleinrichtungen der landwirtschaftlichen Arbeitsmaschine ohne zusätzlichen Rechenaufwand den identischen Betriebszustand der landwirtschaftlichen Arbeitsmaschine erhalten, sodass der Antriebsmotor als auch die Arbeitsaggregate einheitlich und rechenaufwandreduziert bezüglich des ermittelten Betriebszustand angesteuert und/oder geregelt werden.

Die einheitliche Nutzung des Betriebszustandes hat den weiteren Vorteil, dass beispielsweise Arbeitsaggregate ohne zusätzlichen Aufwand in verschiedenen landwirtschaftlichen Arbeitsmaschinen eingesetzt werden können, ohne dass irgendwelche steuerungs- und/oder regelungstechnischen Anpassungen der Steuer- und/oder Regeleinrichtungen bezüglich einer Betriebszustandsermittlung erforderlich sind.

Bei einer vorteilhaften Weiterbildung der erfindungsgemäßen Lösung ist vorgesehen, dass alle Steuer- und/oder Regeleinrichtungen der Arbeitsaggregate jeweils dazu vorgesehen und eingerichtet, insbesondere ausgebildet und/oder programmiert, sind, das jeweilige Arbeitsaggregat in Abhängigkeit des von der Zustandsermittlungsvorrichtung übermittelten Betriebszustandes der landwirtschaftlichen Arbeitsmaschine einzustellen, insbesondere zu steuern und/oder zu regeln.

Hierbei kann es vorgesehen sein, dass zwischen dem Antriebsmotor und jedem Arbeitsaggregat jeweils eine einstellbare Kopplung ausgebildet ist, die von der Steuer- und/oder Regeleinrichtung des jeweiligen Arbeitsaggregates in Abhängigkeit des von der Zustandsermittlungsvorrichtung übermittelten Betriebszustandes der landwirtschaftlichen Arbeitsmaschine eingestellt, insbesondere gesteuert und/oder geregelt, wird.

Unter einer Kopplung kann eine mechanische, eine elektrische, eine pneumatische und/oder eine hydraulische Kopplung zwischen dem Antriebsmotor und einem Arbeitsaggregat verstanden werden, wobei die Kopplung dazu ausgebildet ist, dass ausgehend vom Antriebsmotor über die Kopplung ein Antrieb des Arbeitsaggregates ermöglicht wird.

Jede Steuer- und/oder Regeleinrichtung eines Arbeitsaggregats kann kommunizierend mit der einstellbaren Kopplung des jeweiligen Arbeitsaggregats verbunden sein. Die Steuer- und/oder Regeleinrichtung eines Arbeitsaggregats kann eine Drehzahl des Arbeitsaggregats und/oder Positionierung des Arbeitsaggregats in Abhängigkeit von der Zustandsermittlungsvorrichtung übermittelten Betriebszustandes der Erntemaschine vorgeben.

Bei einer vorteilhaften Weiterbildung der erfindungsgemäßen Lösung ist vorgesehen, dass die Steuer- und/oder Regeleinrichtung des Antriebsmotors dazu vorgesehen und eingerichtet, insbesondere ausgebildet und/oder programmiert, ist, den Antriebsmotor in Abhängigkeit des von der Zustandsermittlungsvorrichtung übermittelten Betriebszustandes der landwirtschaftlichen Arbeitsmaschine einzustellen, insbesondere zu steuern und/oder zu regeln. Die Steuer- und/oder Regeleinrichtung des Antriebsmotors kann eine Drehzahl des Antriebsmotors in Abhängigkeit von der Zustandsermittlungsvorrichtung übermittelten Betriebszustandes der Erntemaschine vorgeben.

Bei einer vorteilhaften Weiterbildung der erfindungsgemäßen Lösung ist vorgesehen, dass die landwirtschaftliche Arbeitsmaschine ein CAN-Bussystem, wobei CAN für Controller Area Network steht, aufweist und dazu vorgesehen und eingerichtet ist, sensorbasierte Daten bezüglich des Antriebsmotors und/oder sensorbasierte Daten bezüglich der Betriebszustände der Arbeitsaggregate mittels des CAN-Bussystems an die Zustandsermittlungseinrichtung zu übermitteln, wobei die Zustandsermittlungseinrichtung dazu vorgesehen und eingerichtet ist, mittels dieser über das CAN-Bussystem übertragenen sensorbasierten Daten den Betriebszustand der landwirtschaftlichen Arbeitsmaschine zu ermitteln.

Die selbstfahrende landwirtschaftliche Arbeitsmaschine kann Sensoren zur Erzeugung der sensorbasierten Daten bezüglich des Antriebsmotors aufweisen. Diese sensorbasierten Daten bezüglich des Antriebsmotors können Diagnosedaten, insbesondere die Motordrehzahl, das Drehmoment und/oder die Fahrzeuggeschwindigkeit, sein. Es kann vorgesehen sein, dass die sensorbasierten Daten bezüglich des Antriebsmotors unter Verwendung eines Netzwerkprotokolls, insbesondere SAE J1939, an die Zustandsermittlungseinrichtung übermittelt werden.

Die selbstfahrende landwirtschaftliche Arbeitsmaschine kann Sensoren zur Erzeugung der sensorbasierten Daten bezüglich der Betriebszustände der Arbeitsaggregate aufweisen. Diese sensorbasierten Daten bezüglich der Betriebszustände der Arbeitsaggregate können Statussignale sein. Ein solches Statussignal kann beispielsweise der Hauptantriebstatus, der Vorsatzstatus und/oder der Erntegut-Durchsatz sein.

Bei einer vorteilhaften Weiterbildung der erfindungsgemäßen Lösung ist vorgesehen, dass die landwirtschaftliche Arbeitsmaschine eine Positionsbestimmungsvorrichtung aufweist und dazu vorgesehen und eingerichtet ist, satellitenbasierte Positionssignaldaten mittels des CAN-Bussystems an die Zustandsermittlungseinrichtung zu übermitteln, wobei die Zustandsermittlungseinrichtung dazu vorgesehen und eingerichtet ist, zusätzlich zu den übertragenen sensorbasierten Daten die über das CAN-Bussystem übertragenen Positionssignaldaten zur Ermittlung des Betriebszustandes der landwirtschaftlichen Arbeitsmaschine zu verwenden. Hierdurch kann beispielsweise der Betriebszustand ermittelt werden, ob die landwirtschaftliche Arbeitsmaschine sich auf einem Feld oder auf einer Straße befindet.

Bei einer vorteilhaften Weiterbildung der erfindungsgemäßen Lösung ist vorgesehen, dass die Steuer- und/oder Regeleinrichtung des Antriebsmotors dazu vorgesehen und eingerichtet, insbesondere ausgebildet und/oder programmiert, ist, eine Motordrehzahl des Antriebsmotors in Abhängigkeit des von der Zustandsermittlungsvorrichtung übermittelten Betriebszustandes der landwirtschaftlichen Arbeitsmaschine einzustellen, insbesondere zu steuern und/oder zu regeln.

Bei einer vorteilhaften Weiterbildung der erfindungsgemäßen Lösung ist vorgesehen, dass wenigstens eine der Steuer- und/oder Regeleinrichtungen der Arbeitsaggregate dazu vorgesehen und eingerichtet, insbesondere ausgebildet und/oder programmiert, ist, eine Aggregatdrehzahl und/oder eine Aggregatposition des Arbeitsaggregates in Abhängigkeit des von der Zustandsermittlungsvorrichtung übermittelten Betriebszustandes der landwirtschaftlichen Arbeitsmaschine einzustellen, insbesondere zu steuern und/oder zu regeln.

Bei einer vorteilhaften Weiterbildung der erfindungsgemäßen Lösung ist vorgesehen, dass wenigstens eine der Steuer- und/oder Regeleinrichtungen der Arbeitsaggregate dazu vorgesehen und eingerichtet, insbesondere ausgebildet und/oder programmiert, ist, einen Hydraulikdruck des Arbeitsaggregates in Abhängigkeit des von der Zustandsermittlungsvorrichtung übermittelten Betriebszustandes der landwirtschaftlichen Arbeitsmaschine einzustellen, insbesondere zu steuern und/oder zu regeln.

Bei einer vorteilhaften Weiterbildung der erfindungsgemäßen Lösung ist vorgesehen, dass dass alle Steuer- und/oder Regeleinrichtungen der Arbeitsaggregate jeweils dazu vorgesehen und eingerichtet, insbesondere ausgebildet und/oder programmiert, sind, das jeweilige Arbeitsaggregat in Abhängigkeit des von der Zustandsermittlungsvorrichtung übermittelten Betriebszustandes der landwirtschaftlichen Arbeitsmaschine auf eine Aggregatdrehzahl einzustellen, insbesondere zu steuern und/oder zu regeln. Hierbei kann es vorgesehen sein, dass die Aggregatdrehzahl minimiert wird. Dies kann beispielsweise eine Vorgewendeabsenkung der Aggregatdrehzahl, eine Leerlaufabsenkung der Aggregatdrehzahl, eine Absenkung der Aggregatdrehzahl beim Entladen im Stand und/oder eine tiefe Absenkungen in Teillast und/oder ein Langstrohbetrieb sein.

Bei einer vorteilhaften Weiterbildung der erfindungsgemäßen Lösung ist vorgesehen, dass die Steuer- und/oder Regeleinrichtung des Antriebsmotors dazu vorgesehen und eingerichtet ist, den Antriebsmotor in Abhängigkeit des von der Zustandsermittlungsvorrichtung übermittelten Betriebszustandes der landwirtschaftlichen Arbeitsmaschine auf eine Motordrehzahl einzustellen. Hierbei kann es vorgesehen sein, dass die Motordrehzahl minimiert wird. Die Minimierung der Motordrehzahl ein hierbei derart sein, dass die landwirtschaftliche Arbeitsmaschine den von der Zustandsermittlungsvorrichtung übermittelten Betriebszustand unter einem minimalen Energieverbrauch vollständig ausführen kann.

Bei einer vorteilhaften Weiterbildung der erfindungsgemäßen Lösung ist vorgesehen, dass der Antriebsmotor einen Verbrennungsmotor.

Bei einer vorteilhaften Weiterbildung der erfindungsgemäßen Lösung ist vorgesehen, dass der Antriebsmotor einen Elektromotor umfasst. Es kann auch vorgesehen sein, dass der Antriebsmotor ein Hybridantrieb mit einem Verbrennungsmotor und einem Elektromotor ausbildet.

Bei einer vorteilhaften Weiterbildung der erfindungsgemäßen Lösung ist vorgesehen, dass ein Arbeitsaggregat ein Vorsatzgerät ausbildet, und/oder dass ein Arbeitsaggregat einen Schrägförderer ausbildet, und/oder ein Arbeitsaggregat ein Dreschwerk ausbildet.

Bei einer vorteilhaften Weiterbildung der erfindungsgemäßen Lösung ist vorgesehen, dass ein Arbeitsaggregat eine Abscheidevorrichtung ausbildet, und/oder dass ein Arbeitsaggregat eine Förder- und Reinigungsvorrichtung ausbildet, und/oder dass ein Arbeitsaggregat einen Kornelevator ausbildet.

Bei einer vorteilhaften Weiterbildung der erfindungsgemäßen Lösung ist vorgesehen, dass ein Arbeitsaggregat eine Überkehrschnecke ausbildet, und/oder dass ein Arbeitsaggregat ein Gebläse ausbildet, und/oder dass ein Arbeitsaggregat einen Strohhäcksler ausbildet, und/oder dass ein Arbeitsaggregat eine Korntankentleerungsvorrichtung ausbildet.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine landwirtschaftliche Arbeitsmaschine, und
- Fig. 2: in schematischer und exemplarischer Darstellung die Verknüpfung von Komponenten der landwirtschaftlichen Arbeitsmaschine der Fig. 1.

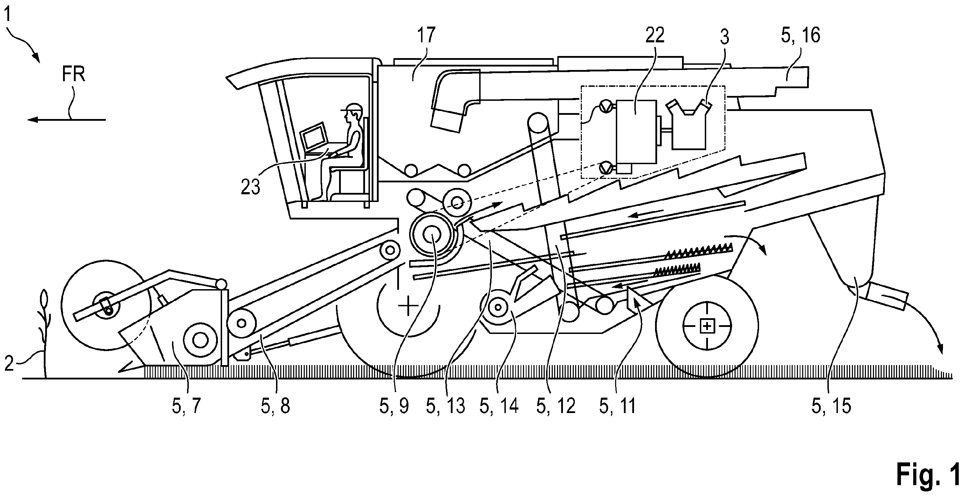

Die Fig. 1 zeigt eine selbstfahrende landwirtschaftliche Arbeitsmaschine 1, insbesondere einen Mähdrescher, zur Aufnahme, Bearbeitung und/oder Weiterleitung von Erntegut 2. Die selbstfahrende landwirtschaftliche Arbeitsmaschine 1 kann ein Bediensystem 23 aufweisen.

Im Betrieb der landwirtschaftliche Arbeitsmaschine 1 fährt die landwirtschaftliche Arbeitsmaschine 1 in eine Fahrtrichtung FR durch den Erntegutbestand 2 und nimmt dabei mit einem Vorsatzgerät 7, welches ein Schneidwerk umfasst, das Erntegut 2 auf. Mit einem Schrägförderer 8 wird dieses Erntegut 2 zum Dreschwerk 9 gefördert. In dem Dreschwerk 9, einer Abscheidungsvorrichtung 10 und einer Förder- und Reinigungsvorrichtung 11 werden die Körner vom restlichen Erntegut getrennt, sodass ein Erntegutstrom entsteht. Die Reinigungsvorrichtung 11 weist ein Gebläse 14 zur Reinigung auf. Der Mähdrescher 1 weist einen Kornelevator 12 zur Förderung eines Erntegutstroms von der Förder- und Reinigungsvorrichtung 11 zu einem Korntank 17 des Mähdreschers 1 auf. Ferner weist der Mähdrescher 1 einen Überkehrschnecke 13 und einen Strohhäcksler 15 auf. Außerdem weist der selbstfahrenden Mähdrescher 1 eine Korntankentleerungsvorrichtung 16 zur Entleerung des Korntanks 17 auf. Diese bisher genannten Komponenten der landwirtschaftlichen Arbeitsmaschine 1 bilden mehrere Arbeitsaggregate 5 aus, die zur Aufnahme, Bearbeitung und/oder Weiterleitung des Ernteguts 2 ausgebildet sind.

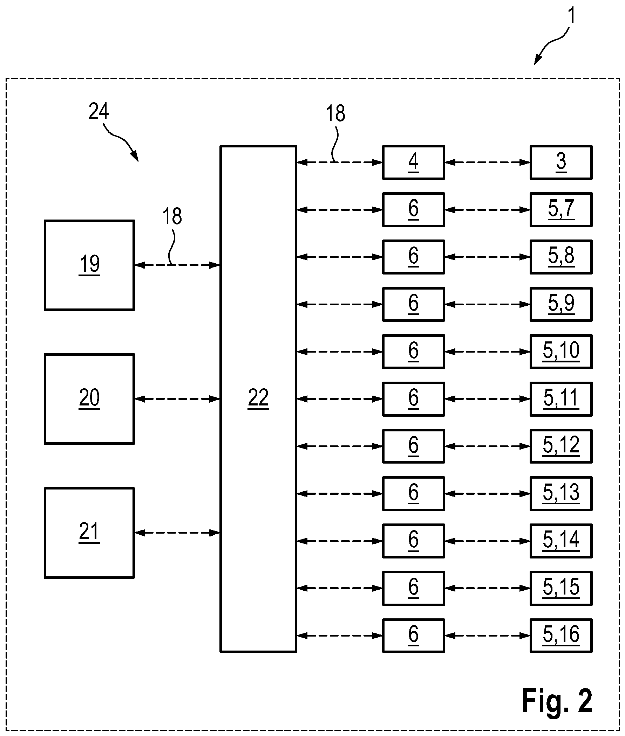

Die selbstfahrende landwirtschaftliche Arbeitsmaschine 1 weist einen Antriebsmotor 3 mit einer Steuer- und/oder Regeleinrichtung 4 auf, die in der Fig. 2 angedeutet ist. Jedes Arbeitsaggregat 5 weist jeweils eine Steuer- und/oder Regeleinrichtung 6 auf. Diese Steuer- und/oder Regeleinrichtungen 4 und 6 können zur Steuerung und/oder Regelung der des Antriebsmotors 3 bzw. der Arbeitsaggregate 5 ausgebildet und/oder programmiert sein.

Die selbstfahrende landwirtschaftliche Arbeitsmaschine 1 weist eine Zustandsermittlungseinrichtung 22 auf, die dazu vorgesehen und eingerichtet ist, einen Betriebszustand der landwirtschaftlichen Arbeitsmaschine 1 zu ermitteln und diesen ermittelten Betriebszustand der landwirtschaftlichen Arbeitsmaschine 1 an alle Steuer- und/oder Regeleinrichtungen 6 der Arbeitsaggregate 5 als auch an die Steuer- und/oder Regeleinrichtung 4 des Antriebsmotors 3 zu übermitteln.

Die Zustandsermittlungseinrichtung 22 kann kommunizierend, insbesondere jeweils kommunizierend, mit den Steuer- und/oder Regeleinrichtungen 6 der Arbeitsaggregate 5 und der Steuer- und/oder Regeleinrichtung 4 des Antriebsmotors 3 verbunden sein.

Der ermittelte Betriebszustand kann eine vordefinierte Erntebetriebssituation der selbstfahrenden landwirtschaftlichen Arbeitsmaschine 1 sein. Der ermittelte Betriebszustand kann sein, dass die selbstfahrende landwirtschaftliche Arbeitsmaschine 1 Erntegut 2 aufnimmt und bearbeitet, und/oder aufgenommenes Erntegut 2 weiterleitet bzw. entlädt, und/oder sich die Arbeitsmaschine 1 in einem Stillstand befindet. Zusätzlich oder alternativ kann der ermittelte Betriebszustand sein, dass sich die selbstfahrende landwirtschaftliche Arbeitsmaschine auf einem zu bearbeitenden Feld, insbesondere in einem Vorgewende, oder auf einer Straße befindet.

Dieser mittels der Zustandsermittlungseinrichtung ermittelte Betriebszustand der landwirtschaftlichen Arbeitsmaschine 1 hat den Vorteil, dass alle Steuer- und/oder Regeleinrichtungen 4, 6 der landwirtschaftlichen Arbeitsmaschine 1 ohne zusätzlichen Rechenaufwand den identischen Betriebszustand der landwirtschaftlichen Arbeitsmaschine 1 erhalten, sodass der Antriebsmotor 3 als auch die Arbeitsaggregate 5 einheitlich und rechenaufwandreduziert bezüglich des ermittelten Betriebszustand angesteuert und/oder geregelt werden.

Alle Steuer- und/oder Regeleinrichtungen 6 der Arbeitsaggregate 5 sind jeweils dazu vorgesehen und eingerichtet, das jeweilige Arbeitsaggregat 5 in Abhängigkeit des von der Zustandsermittlungsvorrichtung 22 übermittelten Betriebszustandes der landwirtschaftlichen Arbeitsmaschine 1 einzustellen. Hierbei kann es vorgesehen sein, dass zwischen dem Antriebsmotor 3 und jedem Arbeitsaggregat 5 jeweils eine einstellbare Kopplung ausgebildet ist, die von der Steuer- und/oder Regeleinrichtung 6 des jeweiligen Arbeitsaggregates 5 in Abhängigkeit des von der Zustandsermittlungsvorrichtung 22 übermittelten Betriebszustandes der landwirtschaftlichen Arbeitsmaschine 1 eingestellt wird. Unter einer Kopplung kann eine mechanische, eine elektrische, eine pneumatische und/oder eine hydraulische Kopplung zwischen dem Antriebsmotor 3 und einem Arbeitsaggregat 5 verstanden werden, wobei die Kopplung dazu ausgebildet ist, dass ausgehend vom Antriebsmotor 5 über die Kopplung ein Antrieb des Arbeitsaggregates 5 ermöglicht wird.

Jede Steuer- und/oder Regeleinrichtung 6 eines Arbeitsaggregats 5 kann kommunizierend mit der einstellbaren Kopplung des jeweiligen Arbeitsaggregats 5 verbunden sein. Die Steuer- und/oder Regeleinrichtung 6 eines Arbeitsaggregats 5 kann eine Drehzahl des Arbeitsaggregats und/oder Positionierung des Arbeitsaggregats in Abhängigkeit von der Zustandsermittlungsvorrichtung 22 übermittelten Betriebszustandes der Erntemaschine 1 vorgeben.

Die Steuer- und/oder Regeleinrichtung 4 des Antriebsmotors 2 ist dazu vorgesehen und eingerichtet, den Antriebsmotor 2 in Abhängigkeit des von der Zustandsermittlungsvorrichtung 22 übermittelten Betriebszustandes der landwirtschaftlichen Arbeitsmaschine 1 einzustellen. Die Steuer- und/oder Regeleinrichtung 4 des Antriebsmotors 3 kann beispielsweise eine Drehzahl des Antriebsmotors 3 in Abhängigkeit von der Zustandsermittlungsvorrichtung 22 übermittelten Betriebszustandes der Erntemaschine 1 vorgeben.

Die landwirtschaftliche Arbeitsmaschine 1 kann ein CAN-Bussystem 24 mit Datenverbindungen 18 aufweisen, sodass sensorbasierte Daten bezüglich des Antriebsmotors 3 und/oder sensorbasierte Daten bezüglich der Betriebszustände der Arbeitsaggregate 5 mittels des CAN-Bussystems 24 an die Zustandsermittlungseinrichtung 22 übermittelt werden, wobei die Zustandsermittlungseinrichtung 22 dazu vorgesehen und eingerichtet ist, mittels dieser über das CAN-Bussystem 24 übertragenen sensorbasierten Daten den Betriebszustand der landwirtschaftlichen Arbeitsmaschine 1 zu ermitteln.

Die selbstfahrende landwirtschaftliche Arbeitsmaschine 1 kann nicht dargestellte Sensoren zur Erzeugung der sensorbasierten Daten bezüglich des Antriebsmotors 3 aufweisen. Diese sensorbasierten Daten bezüglich des Antriebsmotors 3 können Diagnosedaten, insbesondere die Motordrehzahl, das Drehmoment und/oder die Fahrzeuggeschwindigkeit, sein. Mit anderen Worten ausgedrückt, bilden diese sensorbasierten Daten, wie in der Fig. 2 dargestellt, eine sensorbasierte Datenquelle 19 aus. Es kann vorgesehen sein, dass die sensorbasierten Daten bezüglich des Antriebsmotors unter Verwendung eines Netzwerkprotokolls, insbesondere SAE J1939, an die Zustandsermittlungseinrichtung 22 übermittelt werden.

Die selbstfahrende landwirtschaftliche Arbeitsmaschine kann nicht dargestellte Sensoren zur Erzeugung der sensorbasierten Daten bezüglich der Betriebszustände der Arbeitsaggregate 5 aufweisen. Diese sensorbasierten Daten bezüglich der Betriebszustände der Arbeitsaggregate 5 können Statussignale sein. Ein solches Statussignal kann beispielsweise der Hauptantriebstatus, der Vorsatzstatus und/oder der Erntegut-Durchsatz sein. Mit anderen Worten ausgedrückt, bilden diese sensorbasierten Daten, wie in der Fig. 2 dargestellt, eine weitere sensorbasierte Datenquelle 20 aus.

Die landwirtschaftliche Arbeitsmaschine 1 kann eine nicht dargestellte Positionsbestimmungsvorrichtung aufweisen, die dazu vorgesehen und eingerichtet ist, satellitenbasierte Positionssignaldaten mittels des CAN-Bussystems 24 an die Zustandsermittlungseinrichtung 22 zu übermitteln, wobei die Zustandsermittlungseinrichtung 22 dazu vorgesehen und eingerichtet sein kann, zusätzlich zu den übertragenen sensorbasierten Daten die über das CAN-Bussystem 24 übertragenen Positionssignaldaten zur Ermittlung des Betriebszustandes der landwirtschaftlichen Arbeitsmaschine 1 zu verwenden. Hierdurch kann beispielsweise der Betriebszustand ermittelt werden, ob die landwirtschaftliche Arbeitsmaschine 1 sich auf einem Feld oder auf einer Straße befindet. Mit anderen Worten ausgedrückt, bilden diese satellitenbasierten Positionssignaldaten, wie in der Fig. 2 dargestellt, eine weitere Datenquelle 21 aus.

Die Steuer- und/oder Regeleinrichtung 4 des Antriebsmotors 3 kann dazu vorgesehen und eingerichtet sein, eine Motordrehzahl des Antriebsmotors 3 in Abhängigkeit des von der Zustandsermittlungsvorrichtung 22 übermittelten Betriebszustandes der landwirtschaftlichen Arbeitsmaschine 1 einzustellen. Wenigstens eine der Steuer- und/oder Regeleinrichtungen 6 der Arbeitsaggregate 5 dazu vorgesehen und eingerichtet sein, eine Aggregatdrehzahl und/oder eine Aggregatposition des Arbeitsaggregates 5 in Abhängigkeit des von der Zustandsermittlungsvorrichtung 22 übermittelten Betriebszustandes der landwirtschaftlichen Arbeitsmaschine 1 einzustellen. Hierbei kann es vorgesehen sein, dass die Motordrehzahl und/oder die Aggregatdrehzahl minimiert wird. Dies kann beispielsweise eine Vorgewendeabsenkung der Aggregatdrehzahl, eine Leerlaufabsenkung der Aggregatdrehzahl, eine Absenkung der Aggregatdrehzahl beim Entladen im Stand sein. Die Minimierung der Motordrehzahl des Antriebsmotors 3 kann derart sein, dass die landwirtschaftliche Arbeitsmaschine 1 den von der Zustandsermittlungsvorrichtung 22 übermittelten Betriebszustand unter einem minimalen Energieverbrauch vollständig ausführen kann.

### Bezugszeichenliste

- 1: Selbstfahrende landwirtschaftliche Arbeitsmaschine
- 2: Erntegut
- 3: Antriebsmotor
- 4: Steuer- und Regeleinrichtung des Antriebsmotors
- 5: Arbeitsaggregat
- 6: Steuer- und Regeleinrichtung des Arbeitsaggregats
- 7: Vorsatzgerät
- 8: Schrägförderer
- 9: Dreschwerk
- 10: Abscheidevorrichtung
- 11: Förder- und Reinigungsvorrichtung
- 12: Kornelevator
- 13: Überkehrschnecke
- 14: Gebläse
- 15: Strohhäcksler
- 16: Korntankentleerungsvorrichtung
- 17: Korntank
- 18: Datenverbindung
- 19: Datenquelle
- 20: Datenquelle
- 21: Datenquelle
- 22: Zustandsermittlungseinrichtung
- 23: Bediensystem
- 24: CAN-Bussystem
- FR: Fahrtrichtung

## Patentansprüche

1. Selbstfahrende landwirtschaftliche Arbeitsmaschine (1) zum Aufnehmen, Bearbeiten und Weiterleiten von Erntegut (2),
- mit einer Steuer- und/oder Regeleinrichtung (4) eines Antriebsmotors (3) der landwirtschaftlichen Erntemaschine (1),
- mit mehreren Arbeitsaggregaten (5), die jeweils eine Steuer- und/oder Regeleinrichtung (6) aufweisen,
**dadurch gekennzeichnet,**
**dass** die landwirtschaftliche Arbeitsmaschine (1) eine Zustandsermittlungseinrichtung (22) aufweist, die dazu vorgesehen und eingerichtet ist, einen Betriebszustand der landwirtschaftlichen Arbeitsmaschine (1) zu ermitteln und diesen ermittelten Betriebszustand der landwirtschaftlichen Arbeitsmaschine (1) an alle Steuer- und/oder Regeleinrichtungen (6) der Arbeitsaggregate (5) als auch an die Steuer- und/oder Regeleinrichtung (4) des Antriebsmotors (3) zu übermitteln.

2. Selbstfahrende landwirtschaftliche Arbeitsmaschine (1) nach Anspruch 1,
**dadurch gekennzeichnet,**
**dass** der Betriebszustand der landwirtschaftlichen Arbeitsmaschine (1) ist, dass die selbstfahrende landwirtschaftliche Arbeitsmaschine (1) Erntegut aufnimmt und bearbeitet, und/oder aufgenommenes Erntegut weiterleitet, und/oder die Arbeitsmaschine (1) sich in einem Stillstand befindet, und/oder die Arbeitsmaschine (1) sich in einem Fahrmodus befindet, und/oder die selbstfahrende landwirtschaftliche Arbeitsmaschine (1) sich auf einem zu bearbeitenden Feld, insbesondere in einem Vorgewende, oder auf einer Straße befindet.

3. Selbstfahrende landwirtschaftliche Arbeitsmaschine (1) nach Anspruch 1 oder 2,
**dadurch gekennzeichnet,**
**dass** alle Steuer- und/oder Regeleinrichtungen (6) der Arbeitsaggregate (5) jeweils dazu vorgesehen und eingerichtet sind, das jeweilige Arbeitsaggregat (5) in Abhängigkeit des von der Zustandsermittlungsvorrichtung (22) übermittelten Betriebszustandes der landwirtschaftlichen Arbeitsmaschine (1) einzustellen.

4. Selbstfahrende landwirtschaftliche Arbeitsmaschine (1) nach einem der vorhergehenden Ansprüche,
**dadurch gekennzeichnet,**
**dass** die Steuer- und/oder Regeleinrichtung (4) des Antriebsmotors (3) dazu vorgesehen und eingerichtet ist, den Antriebsmotor (3) in Abhängigkeit des von der Zustandsermittlungsvorrichtung (22) übermittelten Betriebszustandes der landwirtschaftlichen Arbeitsmaschine (1) einzustellen.

5. Selbstfahrende landwirtschaftliche Arbeitsmaschine (1) nach einem der vorhergehenden Ansprüche,
**dadurch gekennzeichnet,**
- **dass** die landwirtschaftliche Arbeitsmaschine (1) ein CAN-Bussystem (24) aufweist und dazu vorgesehen und eingerichtet ist, sensorbasierte Daten bezüglich des Antriebsmotors (3) und/oder sensorbasierte Daten bezüglich der Betriebszustände der Arbeitsaggregate (5) mittels des CAN-Bussystems (24) an die Zustandsermittlungseinrichtung (22) zu übermitteln,
- wobei die Zustandsermittlungseinrichtung (22) dazu vorgesehen und eingerichtet ist, mittels dieser über das CAN-Bussystem (24) übertragenen sensorbasierten Daten den Betriebszustand der landwirtschaftlichen Arbeitsmaschine (1) zu ermitteln.

6. Selbstfahrende landwirtschaftliche Arbeitsmaschine (1) nach Anspruch 5,
**dadurch gekennzeichnet,**
- **dass** die landwirtschaftliche Arbeitsmaschine (1) eine Positionsbestimmungsvorrichtung aufweist und dazu vorgesehen und eingerichtet ist, satellitenbasierte Positionssignaldaten mittels des CAN-Bussystems (24) an die Zustandsermittlungseinrichtung (22) zu übermitteln,
- wobei die Zustandsermittlungseinrichtung (22) dazu vorgesehen und eingerichtet ist, zusätzlich zu den übertragenen sensorbasierten Daten die über das CAN-Bussystem (24) übertragenen Positionssignaldaten zur Ermittlung des Betriebszustandes der landwirtschaftlichen Arbeitsmaschine (1) zu verwenden.

7. Selbstfahrende landwirtschaftliche Arbeitsmaschine (1) nach einem der vorhergehenden Ansprüche,
**dadurch gekennzeichnet,**
**dass** die Steuer- und/oder Regeleinrichtung (4) des Antriebsmotors (3) dazu vorgesehen und eingerichtet ist, eine Motordrehzahl des Antriebsmotors (3) in Abhängigkeit des von der Zustandsermittlungsvorrichtung (22) übermittelten Betriebszustandes der landwirtschaftlichen Arbeitsmaschine (1) einzustellen.

8. Selbstfahrende landwirtschaftliche Arbeitsmaschine (1) nach einem der vorhergehenden Ansprüche,
**dadurch gekennzeichnet,**
**dass** wenigstens eine der Steuer- und/oder Regeleinrichtungen (6) der Arbeitsaggregate (5) dazu vorgesehen und eingerichtet ist, eine Aggregatdrehzahl und/oder eine Aggregatposition des Arbeitsaggregates (5) in Abhängigkeit des von der Zustandsermittlungsvorrichtung (22) übermittelten Betriebszustandes der landwirtschaftlichen Arbeitsmaschine (1) einzustellen.

9. Selbstfahrende landwirtschaftliche Arbeitsmaschine (1) nach einem der vorhergehenden Ansprüche,
**dadurch gekennzeichnet,**
**dass** wenigstens eine der Steuer- und/oder Regeleinrichtungen (6) der Arbeitsaggregate (5) dazu vorgesehen und eingerichtet ist, einen Hydraulikdruck des Arbeitsaggregates (5) in Abhängigkeit des von der Zustandsermittlungsvorrichtung (22) übermittelten Betriebszustandes der landwirtschaftlichen Arbeitsmaschine (1) einzustellen.

10. Selbstfahrende landwirtschaftliche Arbeitsmaschine (1) nach einem der vorhergehenden Ansprüche,
**dadurch gekennzeichnet,**
**dass** alle Steuer- und/oder Regeleinrichtungen (6) der Arbeitsaggregate (5) jeweils dazu vorgesehen und eingerichtet sind, das jeweilige Arbeitsaggregat (5) in Abhängigkeit des von der Zustandsermittlungsvorrichtung (22) übermittelten Betriebszustandes der landwirtschaftlichen Arbeitsmaschine (1) auf eine Aggregatdrehzahl einzustellen.

11. Selbstfahrende landwirtschaftliche Arbeitsmaschine (1) nach einem der vorhergehenden Ansprüche,
**dadurch gekennzeichnet,**
**dass** die Steuer- und/oder Regeleinrichtung (4) des Antriebsmotors (3) dazu vorgesehen und eingerichtet ist, den Antriebsmotor (3) in Abhängigkeit des von der Zustandsermittlungsvorrichtung (22) übermittelten Betriebszustandes der landwirtschaftlichen Arbeitsmaschine (1) auf eine Motordrehzahl einzustellen.

12. Selbstfahrende landwirtschaftliche Arbeitsmaschine (1) nach einem der vorhergehenden Ansprüche,
**dadurch gekennzeichnet,**
**dass** der Antriebsmotor (3) einen Verbrennungsmotor umfasst.

13. Selbstfahrende landwirtschaftliche Arbeitsmaschine (1) nach einem der vorhergehenden Ansprüche,
**dadurch gekennzeichnet,**
**dass** der Antriebsmotor (3) einen Elektromotor umfasst.

14. Selbstfahrende landwirtschaftliche Arbeitsmaschine (1) nach einem der vorhergehenden Ansprüche,
**dadurch gekennzeichnet,**
- **dass** ein Arbeitsaggregat (5) ein Vorsatzgerät (7) ausbildet, und/oder
- **dass** ein Arbeitsaggregat (5) einen Schrägförderer (8) ausbildet, und/oder
- ein Arbeitsaggregat (5) ein Dreschwerk (9) ausbildet.

15. Selbstfahrende landwirtschaftliche Arbeitsmaschine (1) nach einem der vorhergehenden Ansprüche,
**dadurch gekennzeichnet,**
- **dass** ein Arbeitsaggregat (5) eine Abscheidevorrichtung (10) ausbildet, und/oder
- **dass** ein Arbeitsaggregat (5) eine Förder- und Reinigungsvorrichtung (11) ausbildet, und/oder
- **dass** ein Arbeitsaggregat (5) einen Kornelevator (12) ausbildet, und/oder
- **dass** ein Arbeitsaggregat (5) eine Überkehrschnecke (13) ausbildet, und/oder
- **dass** ein Arbeitsaggregat (5) ein Gebläse (14) ausbildet, und/oder
- **dass** ein Arbeitsaggregat (5) einen Strohhäcksler (15) ausbildet, und/oder
- **dass** ein Arbeitsaggregat (5) eine Korntankentleerungsvorrichtung (16) ausbildet.
